# EUROPEAN PATENT APPLICATION

(11) **EP 4 254 927 A1**
(43) Date of publication of application: **04.10.2023**
(21) Application number: 22742200.3
(22) Date of filing: 19.01.2022
(51) Int. Cl.: H04N 5/04

(54) **PHOTOGRAPHING METHOD AND ELECTRONIC DEVICE**

(30) Priority: 20.01.2021 CN 202110077728
(71) Applicant: Huawei Technologies Co., Ltd., Shenzhen, Guangdong 518129 (CN)
(72) Inventor: LENG, Ye, Shenzhen, Guangdong 518129 (CN)
(74) Representative: Thun, Clemens
(86) International application number: PCT/CN2022/072818
(87) International publication number: WO 2022/156721

(57) **Abstract**

This application relates to the terminal field, and provides an image shooting method and an electronic device, to reduce a latency between display data obtained by a plurality of electronic devices, so that the electronic device synchronously displays images shot by the plurality of devices, thereby improving user experience. The method includes: A first device may receive a first operation that a user selects to perform synchronous image shooting with a second device. Further, in response to the first operation, the first device may start to capture a shot image, and the first device may indicate the second device to start to capture a shot image. Subsequently, the first device may display an N^{th} frame of shot image of the first device in a first window after waiting for a preset buffer time after the first device obtains the N^{th} frame of shot image of the first device. The first device may display an N^{th} frame of shot image of the second device in a second window after the first device obtains the N^{th} frame of shot image of the second device. The first window and the second window are located on a same display interface.

## Description

This application claims priority to Chinese Patent Application No. 202110077728.4, filed with the China National Intellectual Property Administration on January 20, 2021 and entitled "IMAGE SHOOTING METHOD AND ELECTRONIC DEVICE", which is incorporated herein by reference in its entirety.

### TECHNICAL FIELD

This application relates to the terminal field, and in particular, to an image shooting method and an electronic device.

### BACKGROUND

Currently, many users or homes have a plurality of electronic devices with an image shooting function. In some scenarios, there may be an image shooting scenario in which a user needs to simultaneously use a plurality of electronic devices to perform image shooting.

For example, when watching a show or a game, the user may place an electronic device 1 at a position 1, and place an electronic device 2 at a position 2. In this way, when the electronic device 1 starts a camera to start video recording, the electronic device 1 can control the electronic device 2 to start a camera to start video recording. In addition, in a video recording process, the electronic device 2 may send shot image data to the electronic device 1 in real time. In this case, the electronic device 1 may simultaneously display display data shot by the electronic device 1 and the electronic device 2, to present an image shooting target shot at a plurality of angles to the user.

However, for image data captured at a same moment, due to factors such as a network latency, display data that is sent by the electronic device 2 and that is received by the electronic device 1 is delayed. As a result, when the display data of the electronic device 1 and the display data of the electronic device 2 are displayed simultaneously, image asynchronization occurs, and user experience is reduced.

### SUMMARY

This application provides an image shooting method and an electronic device, to reduce a latency between display data obtained by a plurality of electronic devices, so that the electronic device synchronously displays images shot by the plurality of devices, thereby improving user experience.

To achieve the foregoing objective, this application uses the following technical solutions.

According to a first aspect, this application provides an image shooting method. The method includes: A first device may receive a first operation that a user selects to perform synchronous image shooting with a second device. Further, in response to the first operation, the first device may start to capture a shot image, and the first device may indicate the second device to start to capture a shot image. Subsequently, the first device may display an Nth (N is an integer greater than 0) frame of shot image of the first device in a first window after waiting for a preset buffer time after the first device obtains the Nth frame of shot image of the first device. The first device may display an Nth frame of shot image of the second device in a second window after the first device obtains the Nth frame of shot image of the second device. The first window and the second window are located on a same display interface.

In other words, in a synchronous image shooting scenario, for a same frame of shot image (for example, the Nth frame of shot image), time of obtaining the Nth frame of shot image of the first device is usually earlier than time of obtaining the Nth frame of shot image of the second device. Therefore, to synchronously display the shot images of the first device and the second device, the first device may set the buffer time T. After the first device obtains each frame of shot image from the first device, the first device may display the shot image from the first device after waiting for a period of time based on the buffer time T. After the first device obtains each frame of shot image from the second device, the first device may directly display the shot image of the second device. In this way, after the buffer time T, the shot image of the first device can be presented to the user synchronously with the shot image of the second device as much as possible, thereby improving user experience.

In a possible implementation, after the first device receives the first operation that the user selects to perform synchronous image shooting with the second device, the method further includes: The first device obtains a first latency, where the first latency indicates time consumed by the first device to perform image processing on a frame of shot image. The first device obtains a second latency, where the second latency indicates time consumed by the second device to perform image processing on a frame of shot image. The first device obtains a third latency, where the third latency indicates a network latency for transmitting a frame of shot image between the second device and the first device. The buffer time=the second latency+the third latency-the first latency.

In other words, the first device may predict, based on the first latency (also referred to as a master device latency L1), the second latency (also referred to as a slave device latency L2), and the third latency (also referred to as a transmission latency L3), that after the first device subsequently obtains the shot image from the first device, the corresponding shot image from the second device can be obtained only after time of L2+L3-L1. Therefore, the first device can set the buffer time T to L2+L3-L1.

In a possible implementation, after the first device receives the first operation that the user selects to perform synchronous image shooting with the second device, the method further includes: The first device obtains an image shooting capability parameter of the second device, where the image shooting capability parameter indicates an image processing capability of the second device. The first device determines an image shooting policy based on the image shooting capability parameter, where the image shooting policy includes X image processing tasks to be executed by the first device and Y image processing tasks to be executed by the second device, and both X and Y are integers greater than 0. The first latency is time required by the first device to execute the X image processing tasks, and the second latency is time required by the second device to execute the Y image processing tasks.

In a possible implementation, that the first device obtains a third latency includes: The first device sends a test data packet to the second device. The first device receives a response data packet sent by the second device in response to the test data packet. The first device calculates the third latency based on a time interval between sending the test data packet and receiving the response data packet.

In a possible implementation, when N>1, the method further includes: The first device obtains an actual image latency between the Nth frame of shot image of the first device and the Nth frame of shot image of the second device. The first device updates the buffer time based on the actual image latency. In other words, the first device may dynamically update the buffer time T based on an actual image latency of each frame of shot image between the first device and the second device, so that the buffer time T is consistent with a current image latency between the first device and the second device as much as possible. In this way, the first device synchronously displays shot images of the two devices as much as possible in a synchronous image shooting process.

In a possible implementation, that the first device obtains an actual image latency between the Nth frame of shot image of the first device and the Nth frame of shot image of the second device includes: The first device records first time T1 at which the Nth frame of shot image of the first device is obtained. The first device records second time T2 at which the Nth frame of shot image of the second device is obtained. The first device calculates the actual image latency between the Nth frame of shot image of the first device and the Nth frame of shot image of the second device. The actual image latency=the second time T2-the first time T1.

In a possible implementation, that the first device updates the buffer time based on the actual image latency includes: The first device sets a value of the buffer time to a value of the actual image latency. In other words, the buffer time T is equal to a latest actual image latency.

Alternatively, the first device may predict an image latency between a next frame of shot image from the first device and a next frame of shot image from the second device based on the image latency according to a preset algorithm, to update the buffer time T.

In a possible implementation, after the first device updates the buffer time based on the actual image latency, the method further includes: The first device displays an (N+1)th frame of shot image of the first device in the first window after waiting for an updated buffer time after the first device obtains the (N+1)th frame of shot image from the first device. The first device displays an (N+1)th frame of shot image of the second device in the second window after the first device obtains the (N+1)th frame of shot image from the second device.

In other words, in a process of synchronous image shooting between the first device and the second device, the first device may calculate the actual image latency between the Nth (N is an integer greater than 0) frames of shot images of the first device and the second device, to predict an image latency between the (N+1)th frames of shot images of the first device and the second device. In this way, a mobile phone can update the buffer time T based on a prediction result, so that the (N+1)th shot image from the first device may be more synchronously presented to the user with the (N+1)th frame of shot image from the second device after the buffer time T, to ensure that the mobile phone synchronously displays shot images of a plurality of devices as much as possible, thereby improving user experience.

In a possible implementation, the first window may include an identifier of the first device, and the second window may include an identifier of the second device, to notify the user of a specific device from which a shot image displayed in each window comes.

In a possible implementation, that the first device obtains the Nth frame of shot image from the first device includes: The first device captures image data of the Nth frame by using a camera. The first device performs image processing (for example, beauty, focusing, and exposure adjustment) on the image data of the Nth frame to obtain the corresponding Nth frame of shot image.

In a possible implementation, before the first device receives the first operation that the user selects to perform synchronous image shooting with the second device, the method further includes: The first device displays a preview interface of a camera application, where the preview interface includes a button used for synchronous image shooting. The first device displays a candidate device list in the preview interface in response to a second operation used to tap the button, where the candidate device list includes the second device. The first operation is an operation in which the user selects the second device from the candidate device list.

In a possible implementation, after the first device receives the first operation that the user selects to perform synchronous image shooting with the second device, the method further includes: The first device performs clock synchronization with the second device in response to the first operation. When clocks of the first device and the second device are synchronized, accuracy of the image latency determined by the first device according to the foregoing method is higher, so that shot images of the two devices are synchronous as much as possible.

According to a second aspect, this application provides an electronic device (for example, the foregoing first device), including a display, a communication module, one or more processors, one or more memories, one or more cameras, and one or more computer programs. The processor is coupled to the communication module, the display, the camera, and the memory. The one or more computer programs are stored in the memory. When the electronic device runs, the processor executes the one or more computer programs stored in the memory, so that the electronic device executes the image shooting method in any one of the foregoing aspects.

According to a third aspect, this application provides an electronic device (for example, the foregoing second device), including a communication module, one or more processors, one or more memories, one or more cameras, and one or more computer programs. The processor is coupled to both the communication module and the memory. The one or more computer programs are stored in the memory. When the electronic device runs, the processor executes the one or more computer programs stored in the memory, so that the electronic device executes the image shooting method in any one of the foregoing aspects.

According to a fourth aspect, this application provides an audio system, including the foregoing first device and second device. The first device and the second device may perform the image shooting method in any one of the foregoing aspects through interaction.

According to a fifth aspect, this application provides a computer-readable storage medium, including computer instructions. When the computer instructions are run on the foregoing first device or second device, the first device or the second device is enabled to perform the image shooting method according to any one of the foregoing aspects.

According to a sixth aspect, this application provides a computer program product. When the computer program product runs on the foregoing first device or second device, the first device or the second device is enabled to perform the image shooting method according to any one of the foregoing aspects.

It can be understood that the electronic device, the audio system, the computer-readable storage medium, and the computer program product provided in the foregoing aspects are all applied to the corresponding method provided above. Therefore, for beneficial effect that can be achieved by the electronic device, the audio system, the computer-readable storage medium, and the computer program product, refer to the beneficial effect in the corresponding method provided above. Details are not described herein again.

### BRIEF DESCRIPTION OF DRAWINGS

FIG. 1 is a schematic diagram of an architecture of a distributed image shooting system according to an embodiment of this application;
FIG. 2 is a schematic diagram 1 of an application scenario of an image shooting method according to an embodiment of this application;
FIG. 3 is a schematic diagram 2 of an application scenario of an image shooting method according to an embodiment of this application;
FIG. 4 is a schematic diagram 3 of an application scenario of an image shooting method according to an embodiment of this application;
FIG. 5 is a schematic diagram 1 of a structure of an electronic device according to an embodiment of this application;
FIG. 6 is a schematic diagram of an architecture of an operating system in an electronic device according to an embodiment of this application;
FIG. 7 is a schematic diagram 4 of an application scenario of an image shooting method according to an embodiment of this application;
FIG. 8(a) and FIG. 8(b) are a schematic diagram 5 of an application scenario of an image shooting method according to an embodiment of this application;
FIG. 9 is a schematic diagram 6 of an application scenario of an image shooting method according to an embodiment of this application;
FIG. 10 is a schematic diagram 7 of an application scenario of an image shooting method according to an embodiment of this application;
FIG. 11 is a schematic diagram 8 of an application scenario of an image shooting method according to an embodiment of this application;
FIG. 12 is a schematic diagram 9 of an application scenario of an image shooting method according to an embodiment of this application;
FIG. 13 is a schematic diagram 10 of an application scenario of an image shooting method according to an embodiment of this application;
FIG. 14A is a schematic diagram 11 of an application scenario of an image shooting method according to an embodiment of this application;
FIG. 14B is a schematic diagram 12 of an application scenario of an image shooting method according to an embodiment of this application;
FIG. 15 is a schematic diagram 13 of an application scenario of an image shooting method according to an embodiment of this application;
FIG. 16 is a schematic diagram 14 of an application scenario of an image shooting method according to an embodiment of this application;
FIG. 17 is a schematic diagram 15 of an application scenario of an image shooting method according to an embodiment of this application;
FIG. 18 is a schematic diagram 16 of an application scenario of an image shooting method according to an embodiment of this application;
FIG. 19 is a schematic diagram 2 of a structure of an electronic device according to an embodiment of this application; and
FIG. 20 is a schematic diagram 3 of a structure of an electronic device according to an embodiment of this application.

### DESCRIPTION OF EMBODIMENTS

The following describes implementations of embodiments in detail with reference to the accompanying drawings.

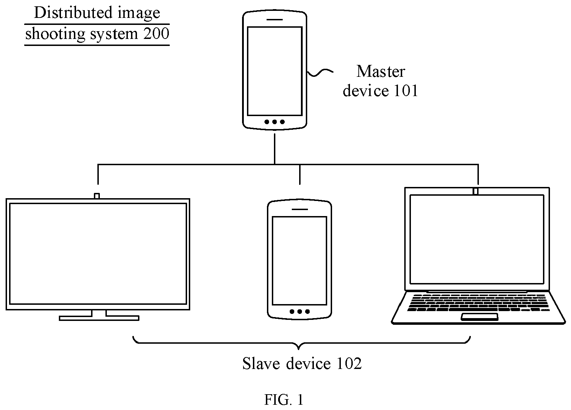

An image shooting method provided in an embodiment of this application is applicable to a distributed image shooting system 200 shown in FIG. 1. As shown in FIG. 1, the distributed image shooting system 200 may include a master (master) device 101 and N slave (slave) devices 102, where N is an integer greater than 0. The master device 101 may communicate with any slave device 102 in a wired manner or in a wireless manner.

For example, a wired connection may be established between the master device 101 and the slave device 102 by using a universal serial bus (universal serial bus, USB). For another example, a wireless connection may be established between the master device 101 and the slave device 102 by using a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5G and subsequent standard protocols, Bluetooth, wireless fidelity (wireless fidelity, Wi-Fi), NFC, voice over internet protocol (voice over Internet protocol, VoIP), or a communication protocol that supports a network slice architecture.

One or more cameras may be disposed in both the master device 101 and the slave device 102. The master device 101 may capture image data by using the camera of the master device 101, and the slave device 102 may also capture image data by using the camera of the slave device 102. In this embodiment of this application, the master device 101 and the slave device 102 may simultaneously use their own cameras to capture image data. In addition, the slave device 102 may send the image data to the master device 101, and the master device 101 simultaneously displays the image data from the master device 101 and the slave device 102, thereby implementing a cross-device distributed image shooting function.

For example, the master device 101 (or the slave device 102) may specifically be an electronic device having an image shooting function, such as a mobile phone, a tablet computer, a television (also referred to as a smart television, a smart screen, or a large-screen device), a notebook computer, an ultra-mobile personal computer (Ultra-mobile Personal Computer, UMPC), a handheld computer, a netbook, a personal digital assistant (Personal Digital Assistant, PDA), a wearable electronic device (for example, a smart watch, a smart band, or smart glasses), a vehicle-mounted device, or a virtual reality device. This is not limited in this embodiment of this application.

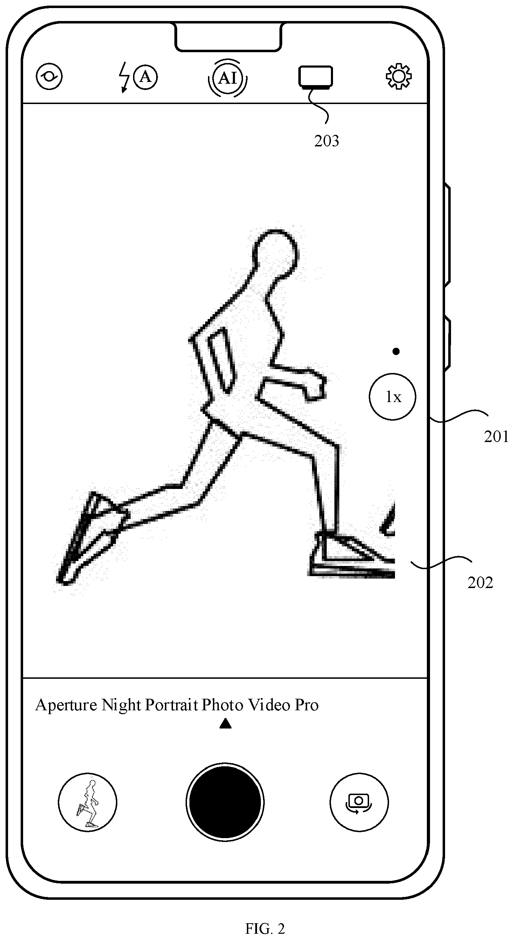

For example, the mobile phone is the master device 101. A camera application used to implement the image shooting function may be installed in the mobile phone. As shown in FIG. 2, after it is detected that a user starts the camera application, the mobile phone may start the camera of the mobile phone to start to capture image data, and display a corresponding shot image in a preview box 202 on a preview interface 201 in real time based on the captured image data.

The shot image displayed by the mobile phone in the preview box 202 may be different from the image data captured by the mobile phone by using the camera. For example, after obtaining the image data captured by the camera, the mobile phone may execute an image processing task such as image stabilization, focusing, soft focus, blurring, filter, beauty, face detection, or AR recognition on the captured image data, to obtain an image processed shot image. Further, the mobile phone may display the image processed shot image in the preview box 202.

Similarly, the slave device 102 may also start the camera of the slave device 102 to start to capture image data, and execute an image processing task such as image stabilization, focusing, soft focus, blurring, filter, beauty, face detection, or AR recognition on the captured image data, to obtain an image processed shot image. This is not limited in this embodiment of this application.

In this embodiment of this application, the mobile phone may set, in the preview interface 201 of the camera application, a function button 203 used for synchronous image shooting. When the user expects to view, on the mobile phone, the shot images synchronously shot by the mobile phone and the slave device 102, the user may tap the function button 203 to start a synchronous image shooting function.

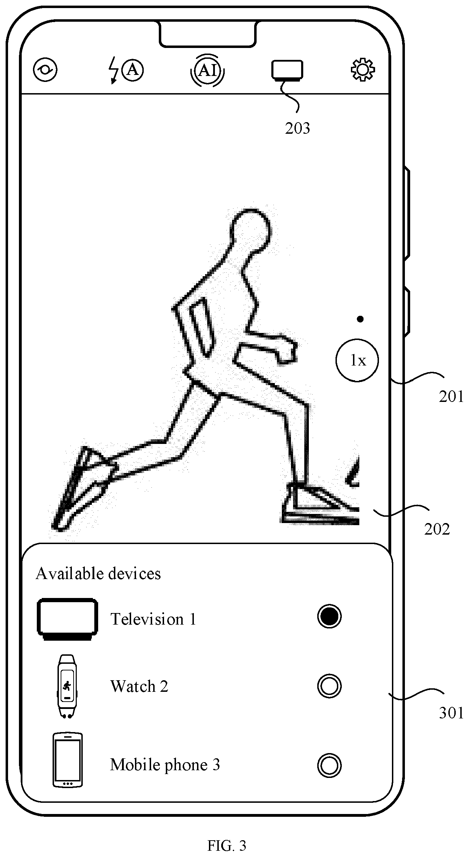

For example, after the mobile phone detects that the user taps the function button 203, as shown in FIG. 3, the mobile phone may display, in a dialog box 301, one or more candidate devices that are currently found by the mobile phone and that can capture image data. For example, a server may record whether each electronic device has the image shooting function. In this case, the mobile phone may query, in the server, an electronic device that has the image shooting function and that logs in to a same account (for example, a Huawei account) as the mobile phone. Further, the mobile phone may display the found electronic device as a candidate device in the dialog box 301.

Alternatively, the mobile phone may search for an electronic device that is located in a same Wi-Fi network as the mobile phone. Further, the mobile phone may send a query request to each electronic device in the same Wi-Fi network, and trigger the electronic device that receives the query request to send a response message to the mobile phone. The response message may indicate whether the electronic device has the image shooting function. In this case, the mobile phone may determine, based on the received response message, the electronic device having the image shooting function in the current Wi-Fi network. In this way, the mobile phone can display the electronic device having the image shooting function as a candidate device in the dialog box 301.

Alternatively, an application used to manage a smart home device (such as a television, an air conditioner, a sound box, or a refrigerator) in a home may be installed in the mobile phone. A smart home application is used as an example. The user may add one or more smart home devices to the smart home application, so that the smart home device added by the user is associated with the mobile phone. For example, a QR code including device information such as a device identifier may be set on the smart home device. After scanning the QR code by using the smart home application in the mobile phone, the user may add the corresponding smart home device to the smart home application, to establish an association relationship between the smart home device and the mobile phone. In this embodiment of this application, when one or more smart home devices added to the smart home application go online, for example, when the mobile phone detects a Wi-Fi signal sent by the added smart home device, the mobile phone may display the smart home device as a candidate device in the dialog box 301, and prompt the user to select to use the corresponding smart home device to perform synchronous image shooting with the mobile phone.

Still as shown in FIG. 3, for example, candidate devices found by the mobile phone include a television 1, a watch 2, and a mobile phone 3. The user may select, from the television 1, the watch 2, and the mobile phone 3, the slave device 102 that performs synchronous image shooting with the mobile phone this time. For example, if it is detected that the user selects the television 1, the mobile phone may use the television 1 as a slave device, and establish a network connection to the television 1. For example, the mobile phone may establish a Wi-Fi connection to the television 1 by using a router. Alternatively, the mobile phone may directly establish a Wi-Fi P2P connection to the television 1. Alternatively, the mobile phone may directly establish a Bluetooth connection to the television 1. Alternatively, the mobile phone may directly establish a short-distance wireless connection to the television 1, where the short-distance wireless connection includes but is not limited to a near field communication (Near Field Communication, NFC) connection, an infrared connection, an ultra-wideband (Ultra Wideband, UWB) connection, and a ZigBee (ZigBee protocol) connection. Alternatively, the mobile phone may directly establish a mobile network connection to the television 1. The mobile network includes but is not limited to a mobile network that supports 2G, 3G, 4G, 5G, and subsequent standard protocols.

In some other embodiments, after the mobile phone detects that the user taps the function button 203, the mobile phone may search for one or more electronic devices having the image shooting function according to the foregoing method. In this way, the mobile phone can automatically establish a network connection to a found electronic device. In this case, the user does not need to manually select a specific device that establishes a network connection to the mobile phone.

Alternatively, before the user starts the camera application, the mobile phone may have established a network connection to one or more electronic devices having the image shooting function. For example, before starting the camera application in the mobile phone, the user has established a Bluetooth connection to the tablet computer. Subsequently, after the mobile phone starts the camera application and displays the preview interface 201 of the camera application, if it is detected that the user taps the function button 203, the mobile phone may no longer search for an electronic device having the image searching function, but perform the following method.

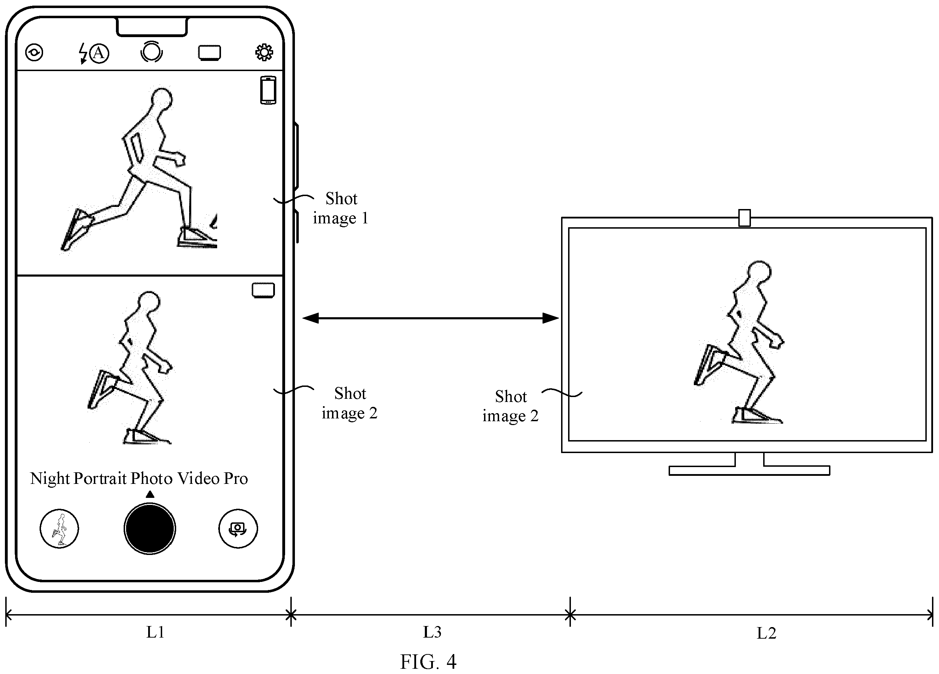

For example, after the mobile phone establishes the network connection to the television 1, on one hand, as shown in FIG. 4, the mobile phone may start the camera of the mobile phone to start to capture image data, and perform image processing on the captured image data to obtain a shot image 1. On the other hand, as shown in FIG. 4, for example, the mobile phone and the television 1 performs image shooting on a same shooting target, the mobile phone may indicate the television 1 to start the camera of the television 1 to start to capture image data, and perform image processing on the captured image data to obtain a shot image 2. Subsequently, the television 1 may send the shot image 2 to the mobile phone. In this way, the mobile phone can simultaneously display the shot image 1 from the mobile phone and the shot image 2 from the television 1 in the display interface of the camera application.

In the foregoing process of synchronous image shooting between the mobile phone and the television 1, still as shown in FIG. 4, time consumed by the mobile phone to perform image processing on the captured image data is L1, time consumed by the television 1 to perform image processing on the captured image data is L2, and time consumed by the television 1 to send the shot image 2 to the mobile phone is L3. Because L2+L3 is generally greater than L1, time at which the mobile phone obtains the shot image 2 is later than time at which the mobile phone obtains the shot image 1, and an image latency S between the shot image 2 and the shot image 1 is equal to L2+L3-L1. Consequently, asynchronization occurs when the mobile phone displays the shot image 1 and the shot image 2, and user experience is affected.

Therefore, in this embodiment of this application, in a process in which the master device 101 (for example, the foregoing mobile phone) performs synchronous image shooting with the slave device 102 (for example, the foregoing television 1), an image latency S between a shot image of the master device 101 and a shot image of the slave device 102 may be calculated in real time. Further, the master device 101 may synchronously display a subsequent shot image of the master device 101 and a subsequent shot image of the slave device 102 based on the image latency S, so that shot images obtained by the master device 101 and the slave device 102 at a same moment can be synchronously presented to the user as much as possible, thereby improving user experience when using the synchronous image shooting function.

Specific details of the master device 101 synchronously displaying the shot image of the master device 101 and the shot image of the slave device 102 are described in detail in a subsequent embodiment, and therefore are not described herein again.

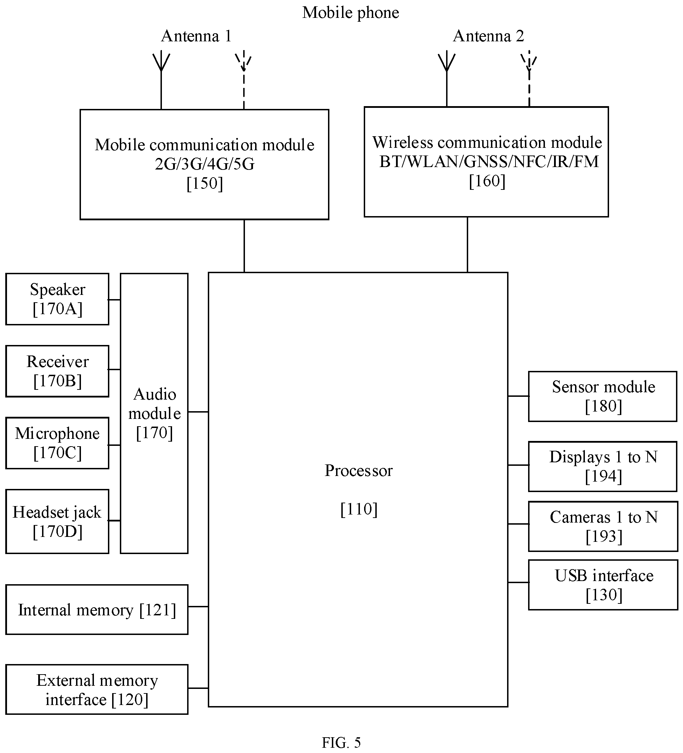

For example, the mobile phone serves as the master device 101 in the distributed image shooting system 200. FIG. 5 is a schematic diagram of a structure of the mobile phone.

The mobile phone may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It can be understood that the structure shown in this embodiment of the present invention does not constitute a specific limitation on the mobile phone. In some other embodiments of this application, the mobile phone may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a solution, applied to the mobile phone, to wireless communication including 2G, 3G, 4G, 5G, or the like. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the mobile phone, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the mobile phone, the antenna 1 and the mobile communication module 150 are coupled, and the antenna 2 and the wireless communication module 160 are coupled, so that the mobile phone can communicate with a network and another device by using a wireless communication technology.

The mobile phone implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone may include one or N displays 194, where N is a positive integer greater than 1.

The mobile phone may implement an image shooting function by using the ISP, a camera 193, the video codec, the GPU, the display 194, the application processor, and the like.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193, where N is a positive integer greater than 1.

The external memory interface 120 may be configured to connect to an external memory card, for example, a micro SD card, to extend a storage capability of the mobile phone. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the mobile phone and data processing. The internal memory 121 may include a program storage area and a data storage area. The program storage area may store an operating system, an application required by at least one function (for example, a voice playing function or an image playing function), and the like. The data storage area may store data (for example, audio data or an address book) created during use of the mobile phone, and the like. In addition, the internal memory 121 may include a high-speed random access memory, or may include a nonvolatile memory, for example, at least one magnetic disk storage device, a flash memory, or a universal flash storage (universal flash storage, UFS).

The mobile phone may implement an audio function, for example, music playing and recording, through the audio module 170, the speaker 170A, the telephone receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The mobile phone may listen to music or answer a hands-free call by using the speaker 170A.

The receiver 170B, also referred to as an "earpiece", is configured to convert an electrical audio signal into a sound signal. When the mobile phone answers a call or receives a voice message, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone. In some other embodiments, two microphones 170C may be disposed in the mobile phone, to collect a sound signal and further implement a noise reduction function. In some other embodiments, three, four, or more microphones 170C may alternatively be disposed in the mobile phone, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

Certainly, the mobile phone may further include a charging management module, a power management module, a battery, a button, an indicator, one or more SIM card interfaces, and the like. This is not limited in this embodiment of this application.

A software system of the mobile phone may use a layered architecture, an event-driven architecture, a microkernel architecture, a microservice architecture, or a cloud architecture. In this embodiment of this application, an Android system of a layered architecture is used as an example to describe the software structure of the mobile phone. Certainly, in another operating system (for example, a HarmonyOS system or a Linux system), the solution of this application can also be implemented provided that a function implemented by each functional module is similar to that in this embodiment of this application.

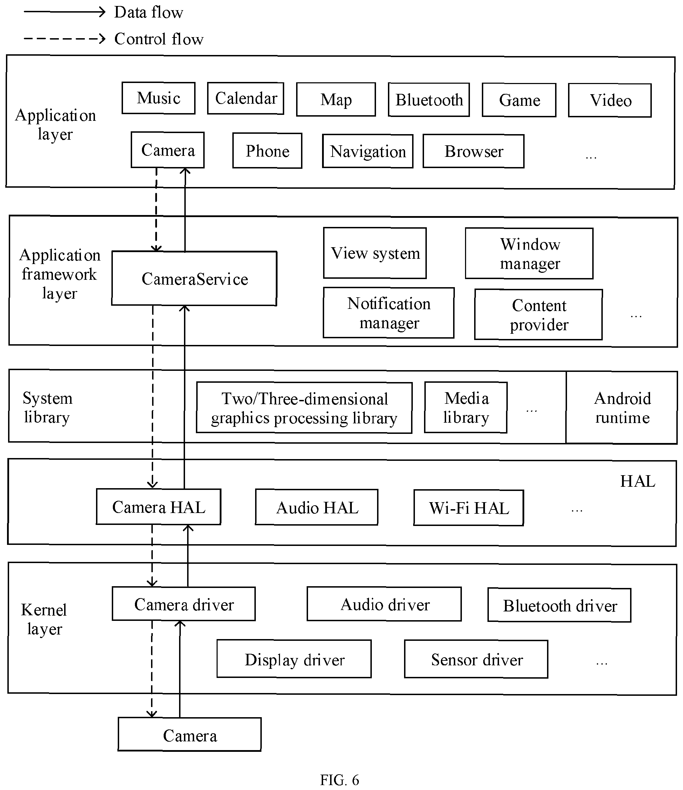

FIG. 6 is a block diagram of the software structure of the mobile phone according to an embodiment of this application.

In a layered architecture, software is divided into several layers, and each layer has a clear role and task. The layers communicate with each other through a software interface. In some embodiments, the Android system is divided into five layers: an application layer, an application framework layer, an Android runtime (Android runtime) and system library, a hardware abstraction layer (hardware abstraction layer, HAL), and a kernel layer from top to bottom.

The application layer may include a series of application packages.

As shown in FIG. 6, applications (applications, apps) such as Phone, Memo, Browser, Contacts, Gallery, Calendar, Map, Bluetooth, Music, Video, and Messages may be installed at the application layer.

In this embodiment of this application, an application having an image shooting function, for example, a camera application, may be installed at the application layer. Certainly, when another application needs to use the image shooting function, the camera application may also be called to implement the image shooting function.

The application framework layer provides an application programming interface (application programming interface, API) and a programming framework for an application at the application layer. The application framework layer includes some predefined functions.

For example, the application framework layer may include a window manager, a content provider, a view system, a resource manager, a notification manager, and the like. This is not limited in this embodiment of this application.

For example, the window manager is configured to manage a window program. The window manager may obtain a size of the display, determine whether there is a status bar, perform screen locking, take a screenshot, and the like. The content provider is configured to store and obtain data, and enable the data to be accessed by an application. The data may include a video, an image, an audio, calls that are made and answered, a browsing history and bookmarks, an address book, and the like. The view system may be configured to construct a display interface of an application. Each display interface may include one or more controls. Generally, the controls may include interface elements such as an icon, a button, a menu, a tab, a text box, a dialog box, a status bar, a navigation bar, and a widget (Widget). The resource manager provides various resources for an application, such as a localized character string, an icon, a picture, a layout file, and a video file. The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed on the status bar, an alert sound is played, vibration is generated, or an indicator light blinks.

As shown in FIG. 6, the Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications. The media library supports playback and recording in a plurality of commonly used audio and video formats, and static image files. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is located below the HAL and is a layer between hardware and software. The kernel layer includes at least a display driver, a camera driver, an audio driver, a sensor driver, and the like. This is not limited in this embodiment of this application.

In this embodiment of this application, still as shown in FIG. 6, a camera application is used as an example. A camera service (CameraService) may be set at the application framework layer. The camera application can call the preset API to start the CameraService. During running, the CameraService may interact with a camera HAL at the HAL (hardware abstraction layer, hardware abstraction layer). The camera HAL interacts with a hardware device (for example, a camera) that implements an image shooting function in the mobile phone. On one hand, the camera HAL hides implementation details (for example, a specific image processing algorithm) of a related hardware device, and on the other hand, the camera HAL may provide an Android system with an interface for invoking the related hardware device.

For example, when the camera application is running, a related control instruction (for example, a preview, zoom-in, photographing, or video recording instruction) delivered by the user may be sent to the CameraService. On one hand, the CameraService may send the received control instruction to the camera HAL, so that the camera HAL may invoke the camera driver at the kernel layer based on the received control instruction, and the camera driver drives hardware devices such as a camera to capture image data in response to the control instruction. For example, the camera may transmit, by using the camera driver, captured image data of each frame to the camera HAL based on a specific frame rate. For a process of transferring the control instruction in the operating system, refer to a specific transfer process of the control flow in FIG. 6.

On the other side, after receiving the foregoing control instruction, the CameraService may determine a current image shooting policy based on the received control instruction. A specific image processing task to be executed on the captured image data is set in the image shooting policy. For example, in a preview mode, the CameraService can set an image processing task 1 in the image shooting policy to implement a face detection function. For another example, if the user enables a beauty function in the preview mode, the CameraService may further set an image processing task 2 in the image shooting policy to implement the beauty function. Then, the CameraService may send the determined image shooting policy to the camera HAL.

After receiving image data of each frame captured by the camera, the camera HAL may execute a corresponding image processing task on the image data according to the image shooting policy delivered by the CameraService, to obtain each image processed frame of shot image. For example, the camera HAL may execute the image processing task 1 on image data of each received frame according to an image shooting policy 1, to obtain each corresponding frame of shot image. After the image shooting policy 1 is updated to the image shooting policy 2, the camera HAL may execute the image processing task 2 and an image processing task 3 on image data of each received frame according to the image shooting policy 2, to obtain each corresponding frame of shot image.

Subsequently, the camera HAL may report each image processed frame of shot image to the camera application by using the CameraService. The camera application may display each frame of shot image in the display interface. Alternatively, the camera application stores each frame of shot image in the mobile phone in a form of a photo or a video. For a process of transferring the short image in the operating system, refer to a specific transfer process of the data flow in FIG. 6.

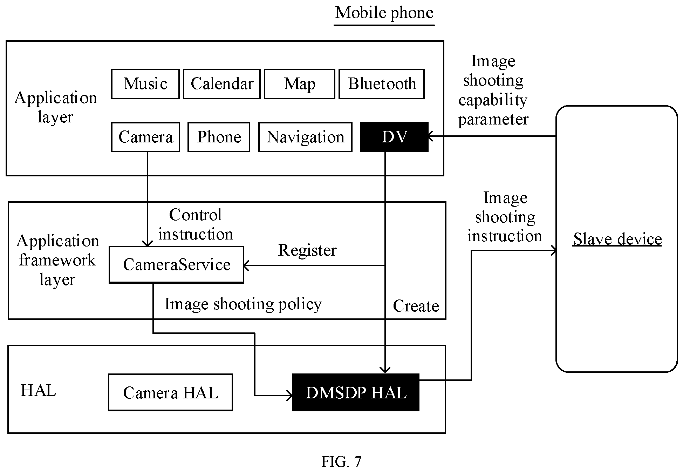

Based on the software architecture of the Android system shown in FIG. 6, in this embodiment of this application, as shown in FIG. 7, a device virtualization (DeviceVirtualization) application used to implement a distributed image shooting function may be installed at the application layer of the mobile phone, and may be subsequently referred to as a DV application. The DV application may permanently run on the mobile phone as a system application. Alternatively, the function implemented by the DV application may permanently run on the mobile phone in a form of a system service.

When the mobile phone needs to use a camera of another electronic device to implement a distributed image shooting function, the DV application in the mobile phone may use the another electronic device as a slave device of the mobile phone to establish a network connection to the mobile phone. Still as shown in FIG. 7, after the DV application in the mobile phone establishes the network connection to the slave device, the DV application may obtain an image shooting capability parameter of the slave device based on the network connection. The image shooting capability parameter indicates an image shooting capability of the slave device. For example, the image shooting capability parameter may include a specific image processing algorithm supported by the slave device, a related hardware parameter of a camera in the slave device, and the like. In this way, the DV application can call a preset interface at the HAL, and input the obtained image shooting capability parameter into the preset interface, to create a HAL corresponding to the slave device at the HAL.

In this embodiment of this application, the HAL created by the DV application based on the image shooting capability parameter of the slave device may be referred to as a distributed mobile sensing development platform (Distributed Mobile Sensing Development Platform, DMSDP) HAL, or may be referred to as a virtual camera HAL. Different from a conventional camera HAL in the mobile phone, the DMSDP HAL does not correspond to an actual hardware device of the mobile phone, but corresponds to the slave device currently connected to the mobile phone. The mobile phone may serve as a master device to receive data from and send data to the slave device by using the DMSDP HAL, and use the slave device as a virtual device of the mobile phone to collaborate with the slave device to complete each service in a distributed image shooting scenario.

In some embodiments, the DV application in the mobile phone may further obtain an audio capability parameter (for example, an audio play latency, an audio sampling rate, or a quantity of sound channels) and a display capability parameter (for example, a screen resolution and a display data coding algorithm) of the slave device. Certainly, if the slave device further has another capability (for example, a printing capability), the slave device may also send a related capability parameter to the DV application in the mobile phone. Similar to the foregoing image shooting capability parameter, the DV application may input all capability parameters related to the slave device into a preset interface, to create a hardware abstraction module corresponding to the slave device, for example, a DMSDP HAL, at the HAL. In this case, the DMSDP HAL has an image processing capability of the slave device, and has an audio and display capability of the slave device, so that the slave device may serve as a virtual device of the mobile phone and collaborate with the mobile phone to complete various services in a distributed scenario.

Still as shown in FIG. 7, in addition to creating the DMSDP HAL corresponding to the slave device of the mobile phone at the HAL, the DV application may further send the image shooting capability parameter of the slave device to the CameraService for storage, that is, register the image shooting capability of the current slave device in the CameraService.

Subsequently, when the mobile phone runs the camera application, the CameraService can determine an image shooting policy in an image shooting process in real time based on a control instruction (for example, an instruction for preview, zoom-in, or video recording) delivered by the camera application and based on the shooting capability of the slave device. For example, the CameraService may set, in the image shooting policy based on the image shooting capability parameter of the slave device, an image processing task to be executed by the mobile phone and an image processing task to be executed by the slave device. In this way, the CameraService can send an image shooting instruction corresponding to the image shooting policy to the slave device by using the DMSDP HAL, to trigger the slave device to execute the corresponding image processing task.

In this way, when the mobile phone and the slave device implement the distributed image shooting function, the mobile phone and the slave device can perform corresponding image processing on image data according to the foregoing image shooting policy and the image shooting capability of the mobile phone and the slave device, so that the mobile phone and the slave device can collaborate more efficiently and flexibly to implement the distributed image shooting function, thereby achieving good image shooting effect in a distributed image shooting scenario.

In this embodiment of this application, the mobile phone and the slave device may perform synchronous image shooting in a distributed image shooting scenario. In subsequent embodiments, an example in which the mobile phone and the slave device shoot a same shooting target is used for description. It may be understood that when the mobile phone and the slave device shoot different shooting targets, synchronous image shooting may also be performed according to the following method. This is not limited in this embodiment of this application.

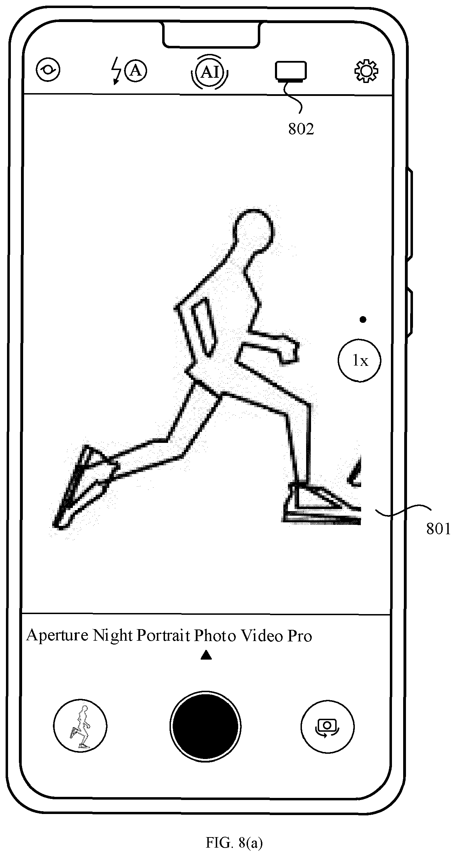

For example, as shown in FIG. 8(a), if it is detected that the user starts the camera application in the mobile phone, the mobile phone may start the camera of the mobile phone to start image shooting. In this case, the mobile phone may display a preview interface 801 of the camera application. A function button 802 of the synchronous image shooting function is disposed in the preview interface 801. If the user wants to use the mobile phone and another electronic device to perform synchronous image shooting together, the user may tap the function button 802.

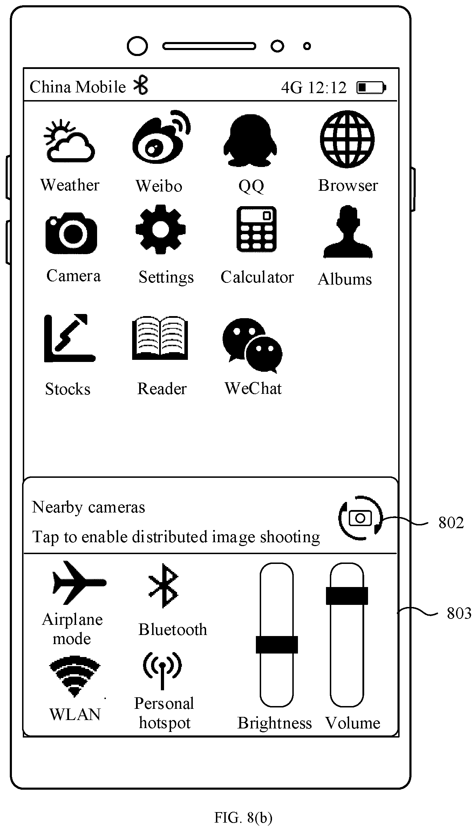

Alternatively, a function button 802 of the synchronous image shooting function may be disposed in a control center, a drop-down menu, a HiBoard menu, or another application (for example, a video call application) of the mobile phone. This is not limited in this embodiment of this application. For example, as shown in FIG. 8(b), the mobile phone may display the control center 803 in response to an operation of opening the control center by the user, and the control center 803 is provided with the foregoing function button 802. If the user wants to use the mobile phone and another electronic device to perform synchronous image shooting together, the user may tap the function button 802.

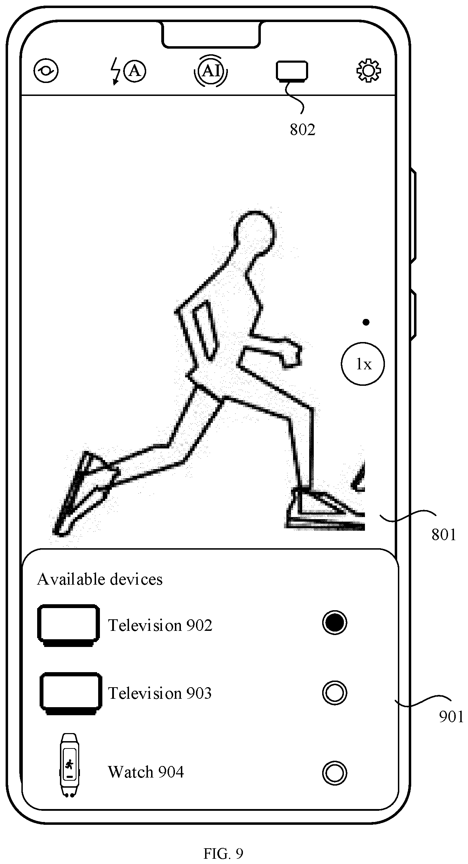

For example, after the mobile phone detects that the user taps the function button 802, the DV application in the mobile phone may trigger the mobile phone to search for one or more nearby candidate devices having an image shooting function nearby. In addition, as shown in FIG. 9, the mobile phone may display, in the dialog box 901, one or more candidate devices that are found. For example, the mobile phone may query, in the server, an electronic device that has an image shooting function and that logs in to a same account as the mobile phone, and display the found electronic device as a candidate device in the dialog box 901.

For example, the candidate devices in the dialog box 901 include a television 902, a television 903, and a watch 904. The user may select, in the dialog box 901, a slave device that implements the synchronous image shooting function in collaboration with the mobile phone. For example, if the mobile phone detects that the user selects the television 902 in the dialog box 901, it indicates that the user wants to use the mobile phone and the television 902 to perform image shooting simultaneously. In this case, the DV application in the mobile phone may establish a network connection to the mobile phone by using the television 902 as a slave device of the mobile phone. For example, the network connection may be a P2P connection based on a transmission control protocol (transmission control protocol, TCP) or a user datagram protocol (user datagram protocol, UDP). As an alternative solution, the network connection further includes a Wi-Fi connection, a Wi-Fi P2P connection, a Bluetooth connection, a short-distance wireless connection (the short-distance wireless connection includes but is not limited to an NFC connection, an infrared connection, a UWB ultra-wideband connection, or a ZigBee connection), or a mobile network connection (a mobile network includes but is not limited to a mobile network that supports 2G, 3G, 4G, 5G, and a subsequent standard protocol). This is not limited in this embodiment of this application.

After the mobile phone establishes the network connection to the television 902, the DV application in the mobile phone may obtain an image shooting capability parameter of the television 902 from the television 902 based on the network connection. The image shooting capability parameter of the television 902 reflects a specific image shooting capability of the television 902. For example, the image shooting capability parameter of the television 902 may include one or more image processing algorithms supported by the television 902, for example, a facial recognition algorithm and an automatic focusing algorithm. For another example, the image shooting capability parameter of the television 902 may include parameters such as a quantity of cameras in the television 902, a resolution of a camera, or a model of an image processor. Further, the DV application may create a corresponding DMSDP HAL at an HAL based on the image shooting capability parameter of the television 902.

Subsequently, when the mobile phone runs the camera application, on one hand, the camera of the mobile phone may be invoked based on a specific frame rate to obtain each frame of shot image; and on the other hand, the mobile phone may indicate the television 902 to obtain each frame of shot image based on a frame rate that is the same as that of the mobile phone, and send the obtained shot image to the camera application in the mobile phone by using the DMSDP HAL. In this way, the camera application in the mobile phone can obtain each frame of shot image from the mobile phone, and obtain each frame of shot image from the television 902. Further, the camera application may synchronously display the shot image of the mobile phone and the shot image of the television 902 in a display interface of the camera application, to implement the synchronous image shooting function.

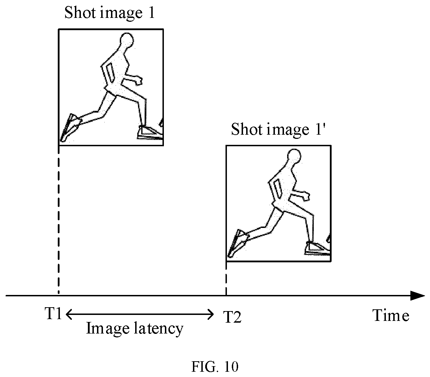

For each frame of shot image, after capturing image data by using the camera, the television 902 needs to perform image processing on the image data to obtain a corresponding shot image. In addition, the television 902 further needs to transmit each frame of shot image to the mobile phone based on the network connection. Therefore, as shown in FIG. 10, time T1 at which the camera application in the mobile phone obtains a shot image 1 from the mobile phone is usually earlier than time T2 at which the television 902 obtains a shot image 1' shot at a same moment. In other words, an image latency between the shot image 1 and the shot image 1' is T2-T1. Due to impact of factors such as an image shooting angle or an image shooting location, content in the shot image 1 and content in the shot image 1' may be the same or different. This is not limited in this embodiment of this application.

In this embodiment of this application, to synchronously display the shot image from the mobile phone and the shot image from the television 902, the mobile phone may set buffer time T. The buffer time T is an image latency that is between a shot image (for example, the shot image 1) of the mobile phone and a shot image (for example, the shot image 1') of the television 902 and that is predicted by the mobile phone. After obtaining each frame of shot image from the mobile phone, the camera application may display the shot image from the mobile phone after waiting for a period of time based on the buffer time T. After obtaining each frame of shot image from the television 902, the camera application may directly display the shot image of the television 902. In this way, after the buffer time T, the shot image of the mobile phone can be presented to the user synchronously with the shot image of the television 902 as much as possible.

The mobile phone may dynamically adjust the buffer time T in the image shooting process, so that the buffer time T can reflect an image latency between a shot image of the mobile phone and a shot image of the television 902 as accurately as possible. In this way, the mobile phone can synchronously display a shot image from the mobile phone and a shot image from the television 902 as much as possible.

The following describes, with reference to a specific example, a method for setting and adjusting the buffer time T by the mobile phone.

For example, after the mobile phone establishes the network connection to the television 902, the CameraService of the mobile phone may obtain time L1 (hereinafter referred to as a master device latency L1) consumed by the mobile phone to perform image processing on subsequently captured image data, time L2 (hereinafter referred to as a slave device latency L2) consumed by the television 902 to perform image processing on subsequently captured image data, and time L3 (hereinafter referred to as a transmission latency L3) consumed by the television 902 to send an image processed shot image to the mobile phone.

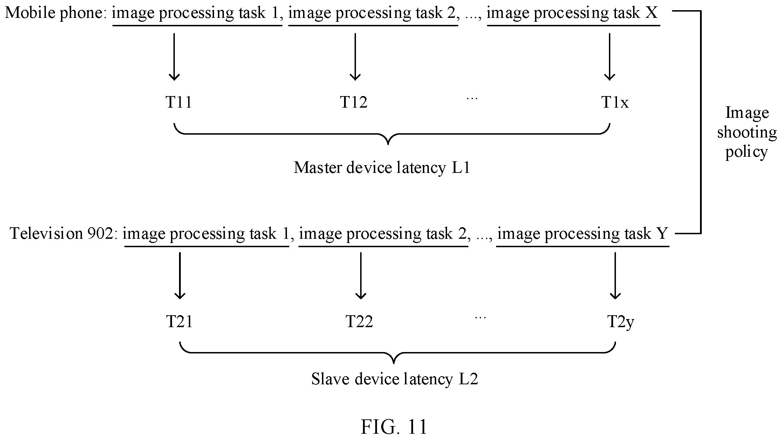

For example, after the mobile phone establishes the network connection to the television 902, the CameraService of the mobile phone may receive the image shooting capability parameter of the television 902 sent by the DV application. The image shooting capability parameter of the television 902 may include a specific image processing algorithm supported by the television 902, and related parameters of devices such as the camera and the image processor used by the television 902. Further, when the camera application in the mobile phone is running, the CameraService of the mobile phone may determine a current image shooting policy in real time based on the image shooting capability parameter of the television 902. As shown in FIG. 11, X (X≥0) image processing tasks to be executed by the mobile phone for captured image data are set in the image shooting policy, and Y (Y≥0) image processing tasks to be executed by the television 902 for captured image data are set in the image shooting policy.

Further, still as shown in FIG. 11, the CameraService of the mobile phone may calculate time required by the mobile phone to execute each of the X image processing tasks. For example, time required by the mobile phone to execute an image processing task 1 is T11, time required by the mobile phone to execute an image processing task 2 is T12, ..., and time required by the mobile phone to execute an image processing task X is T1x. Subsequently, the CameraService of the mobile phone may use a sum of time required by the mobile phone to execute all image processing tasks as the master device latency L1, that is, the master device latency L1=T11+T12+...+T1x. The master device latency L1 reflects time consumed in a process in which the mobile phone captures image data of each frame and performs image processing on the image data of the frame to obtain a corresponding shot image, until the camera application in the mobile phone obtains the frame of shot image.

Similarly, still as shown in FIG. 11, the CameraService of the mobile phone may calculate time required by the television 902 to execute each of the Y image processing tasks. For example, time required by the television 902 to execute an image processing task 1 is T21, time required by the television 902 to execute an image processing task 2 is T22, ..., and time required by the television 902 to execute an image processing task Y is T2y. Subsequently, the CameraService of the mobile phone may use a sum of time required by the television 902 to execute all image processing tasks as the slave device latency L2, that is, the slave device latency L2=T21+T22+...+T2y.

In some embodiments, a value of the transmission latency L3 mainly depends on a network status of a network connection between the mobile phone (that is, a master device) and the television 902 (that is, a slave device). For example, when network quality of the network connection between the mobile phone and the television 902 is good, a corresponding transmission latency L3 decreases; or when network quality of the network connection between the mobile phone and the television 902 is poor, a corresponding audio transmission latency L3 increases. For another example, when a distance between the mobile phone and the television 902 is short, a corresponding transmission latency L3 decreases; or when a distance between the mobile phone and the television 902 is long, a corresponding transmission latency L3 increases.

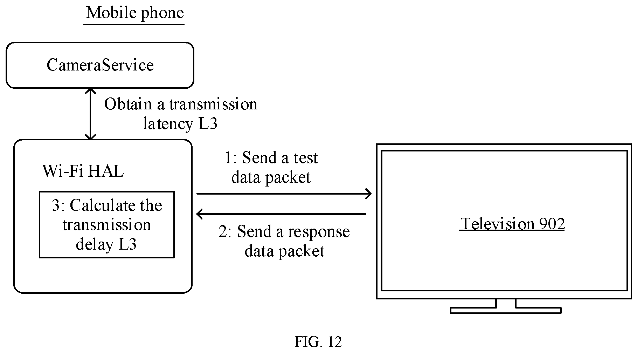

For example, the network connection between the mobile phone and the television 902 is a Wi-Fi P2P connection. The CameraService of the mobile phone may further obtain a current transmission latency L3 between the mobile phone and the television 902 from a Wi-Fi HAL of the mobile phone. For example, as shown in FIG. 12, the Wi-Fi HAL may send a test data packet to the television 902 based on a preset period (for example, 200 ms) by using the Wi-Fi P2P connection between the mobile phone and the television 902. After receiving the test data packet, the television 902 may send a response data packet to the Wi-Fi HAL of the mobile phone. In this case, the Wi-Fi HAL may periodically calculate the current transmission latency L3 between the mobile phone and the television 902 by detecting a time interval N between sending the test data packet and receiving the response data packet, where L3=N/2.

A sum of the slave device latency L2 and the transmission latency L3 (that is, L2+L3) reflects time consumed in a process in which the television 902 captures image data of each frame, performs image processing on the image data of the frame to obtain a corresponding shot image, and transmits the frame of shot image to the mobile phone, until the camera application in the mobile phone obtains the frame of shot image.

In this case, the CameraService of the mobile phone may periodically read a latest transmission latency L3 at the Wi-Fi HAL. Alternatively, the transmission latency L3 may send a latency obtaining instruction to the Wi-Fi HAL, so that the Wi-Fi HAL reports a latest transmission latency L3 to the CameraService in response to the latency obtaining instruction. Alternatively, each time the Wi-Fi HAL updates the transmission latency L3, the Wi-Fi HAL may actively report a latest transmission latency L3 to the CameraService.

After obtaining the master device latency L1, the slave device latency L2, and the transmission latency L3, the CameraService of the mobile phone may set the buffer time T to an initial value T0, T0=(the slave device latency L2+the transmission latency L3)-the master device latency L1. To be specific, the mobile phone may predict, based on the master device latency L1, the slave device latency L2, and the transmission latency L3, that after the camera application subsequently obtains a shot image from the mobile phone, a corresponding shot image from the television 902 can be obtained only after L2+L3-L1. In other words, an image latency between the shot image of the mobile phone and the shot image of the television 902 is T0. Therefore, the mobile phone may set the buffer time T to T0, where T0=L2+L3-L1.

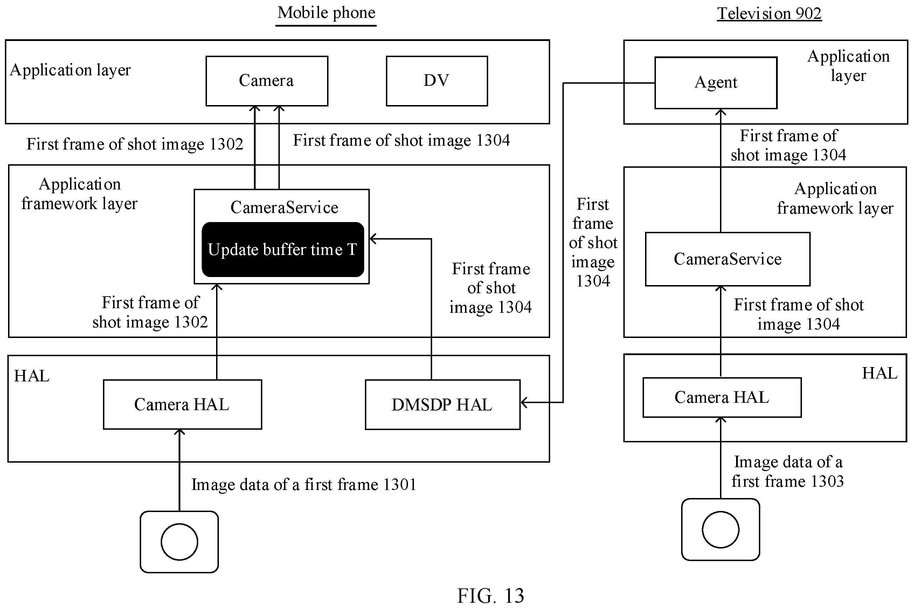

In this way, as shown in FIG. 13, after the camera application of the mobile phone detects that the user starts the synchronous image shooting function, the camera application may invoke the camera of the mobile phone to capture image data. After capturing image data of a first frame 1301, the camera of the mobile phone may send the image data of the first frame 1301 to a camera HAL of the mobile phone, and the camera HAL of the mobile phone performs image processing on the image data of the first frame 1301 according to a current image shooting policy, to obtain an image processed first frame of shot image 1302. Further, the camera HAL of the mobile phone may send the first frame of shot image 1302 to the CameraService of the mobile phone, so that the CameraService of the mobile phone obtains the first frame of shot image 1302 from the mobile phone.

Still as shown in FIG. 13, after the camera application of the mobile phone detects that the user starts the synchronous image shooting function, the camera application may further indicate the television 902 to invoke the camera of the television 902 to capture image data. Similar to the processing process of the mobile phone, after capturing image data of a first frame 1303, the camera of the television 902 may send the image data of the first frame 1303 to a camera HAL of the television 902, and the camera HAL of the television 902 performs image processing on the image data of the first frame 1303 according to the image shooting policy to obtain an image processed first frame of shot image 1304. Further, the camera HAL of the television 902 may upload the first frame of shot image 1304 to an agent application of the television 902 by using the CameraService of the television 902, and the agent application of the television 902 sends the first frame of shot image 1304 to the DMSDP HAL of the mobile phone by using the established network connection. Further, the DMSDP HAL of the mobile phone may send the first frame of shot image 1304 to the CameraService of the mobile phone, so that the CameraService of the mobile phone obtains the first frame of shot image 1304 from the television 902.

Because there is a specific image latency between obtaining the first frame of shot image 1302 and obtaining the first frame of shot image 1304 by the CameraService of the mobile phone, the CameraService of the mobile phone generally obtains the first frame of shot image 1302 from the mobile phone before obtaining the first frame of shot image 1304 from the television 902. Therefore, in this embodiment of this application, after obtaining the first frame of shot image 1302 from the mobile phone, the CameraService of the mobile phone may wait for time T0 based on the current buffer time T (that is, the initial value T0), and then send the first frame of shot image 1302 to the camera application for display. After obtaining the first frame of shot image 1304 from the television 902, the CameraService of the mobile phone may directly send the first frame of shot image 1304 to the camera application for display.

Alternatively, after obtaining the first frame of shot image 1302 from the mobile phone, the CameraService of the mobile phone may directly send the first frame of shot image 1302 to the camera application, and the camera application displays the first frame of shot image 1302 after waiting for the time T0. Correspondingly, after obtaining the first frame of shot image 1304 from the television 902, the camera application may directly display the first frame of shot image 1304.

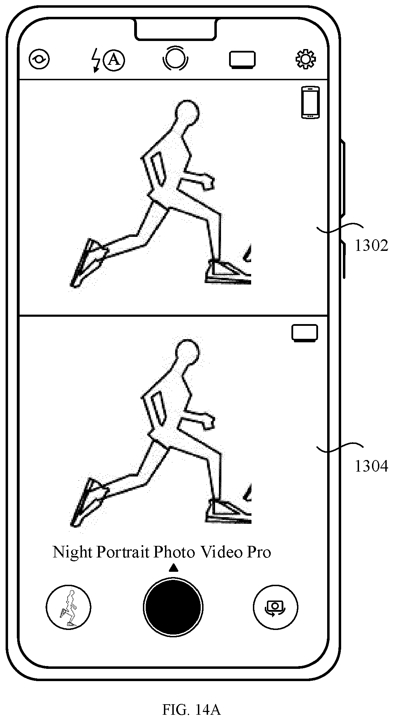

For example, as shown in FIG. 14A, after the time T0, the camera application may display the first frame of shot image 1302 from the mobile phone in a first window, and display the first frame of shot image 1304 from the television 902 in a second window. The first window and the second window indicate two display areas of the display interface. For example, the first window and the second window may be arranged in the display interface (as shown in FIG. 14A) from top to bottom, or may be arranged in the display interface from left to right, or may be presented in the display interface in a picture-in-picture form. This is not limited in this embodiment of this application. In addition, a boundary line may be or not be set for the first window and the second window.

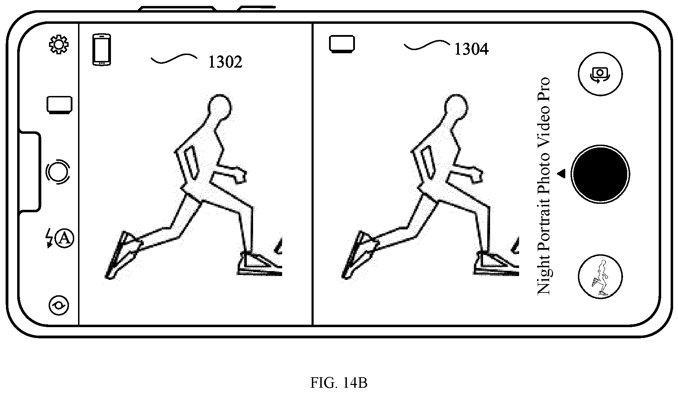

In some embodiments, if the mobile phone is in a landscape mode when receiving the first frame of shot image 1302 and the first frame of shot image 1304, as shown in FIG. 14B, the mobile phone may alternatively display the first frame of shot image 1302 and the first frame of shot image 1304 in different windows in the landscape mode. This is not limited in this embodiment of this application.

It can be learned that, as shown in FIG. 14A or FIG. 14B, after the first frame of shot image 1302 waits for the time T0, the mobile phone may shorten a time difference between the first frame of shot image 1302 from the mobile phone and the first frame of shot image 1304 from the television 902 during display, to ensure that the mobile phone synchronously displays shot images of a plurality of devices as much as possible, thereby improving user experience.

It can be learned that, before the mobile phone and the television 902 start synchronous image shooting, the mobile phone may obtain the master device latency L1, the slave device latency L2, and the transmission latency L3, to predict that an image latency between the first frames of shot images of the mobile phone and the television 902 is L2+L3-L1. Then, the mobile phone may set L2+L3-L1 (that is, the initial value T0) as the buffer time T. In this way, the first frame of shot image from the mobile phone may be more synchronously presented to the user with the first frame of shot image from the television after waiting for the initial value T0.

Certainly, a person skilled in the art may alternatively set another method for predicting the image latency between the first frames of shot images of the mobile phone and the television 902, and then sets a specific value of the initial value T0 based on a prediction result. This is not limited in this embodiment of this application. For example, the mobile phone may collect statistics on an image latency between the first frames of shot images of the mobile phone and the television 902 by using big data, and then use the image latency as the initial value T0 to update the buffer time.

In some embodiments, after obtaining the first frame of shot image 1302 from the mobile phone and the first frame of shot image 1304 from the television 902, the CameraService of the mobile phone may further dynamically update the buffer time T, so that the buffer time T is consistent with a current image latency between the mobile phone and the television 902 as much as possible. In this way, the camera application can synchronously display shot images of the two devices as much as possible in a synchronous image shooting process.

For example, when the CameraService of the mobile phone obtains the first frame of shot image 1302 from the mobile phone, the CameraService of the mobile phone may record current time T 1. When the CameraService of the mobile phone obtains the first frame of shot image 1304 from the television 902, the CameraService of the mobile phone may record current time T2. Further, the CameraService of the mobile phone may calculate an actual image latency S1 between the first frame of shot image 1302 and the first frame of shot image 1304 based on T1 and T2.

In some embodiments, after processing the display data of the first frame 1301 into the first frame of shot image 1302, the camera HAL of the mobile phone may send the first frame of shot image 1302 to the CameraService of the mobile phone in a data packet form. Generally, a data packet includes a head (head) part and a data (data) part. The camera HAL of the mobile phone may add the first frame of shot image 1302 to a data part of a data packet 1, and add information such as an identifier (for example, a frame ID) of the first frame of shot image 1302 to a head part of the data packet 1. Further, the camera HAL of the mobile phone may send the data packet 1 to the CameraService of the mobile phone, and the CameraService of the mobile phone may obtain the first frame of shot image 1302 in the data packet 1 and the identifier 001 of the first frame of shot image 1302 by parsing the data packet 1. In this case, the CameraService of the mobile phone may record a correspondence between current time T1 and the identifier 001.

Similarly, because the first frame of shot image 1304 obtained by the television 902 is also a first frame of shot image, an identifier of the first frame of shot image 1304 may also be 001. The television 902 may add the first frame of shot image 1304 to a data part of a data packet 2, add the identifier of the first frame of shot image 1304 to a head part of the data packet 2, and then send the data packet 2 to the mobile phone. The CameraService of the mobile phone may obtain the first frame of shot image 1304 in the data packet 2 and the identifier 001 of the first frame of shot image 1304 by parsing the data packet 2. In this case, the CameraService of the mobile phone may record current time T2, and search for the time T1 corresponding to the identifier 001. Further, the CameraService of the mobile phone may calculate an actual image latency S1=T2-T1 between the first frame of shot image 1302 and the first frame of shot image 1304.

In some other embodiments, when capturing the display data of the first frame 1301 by using the camera, the mobile phone may record capture time C1 of the display data of the first frame 1301. When the CameraService of the mobile phone obtains, from the camera HAL, the first frame of shot image 1302 corresponding to the display data of the first frame 1301, current time T1 may be recorded. In this case, T1-C1 is time consumed by the mobile phone to perform image processing on the image data of the first frame 1301, that is, T1-C1=the master device latency L1.

Similarly, when capturing the display data of the first frame 1303 by using the camera, the television 902 may record capture time C2 of the display data of the first frame 1303. When the CameraService of the mobile phone obtains, from the television 902, the first frame of shot image 1304 corresponding to the display data of the first frame 1303, current time T2 may be recorded. In this case, T2-C2 is time consumed by the television 902 to perform image processing on the image data of the first frame 1303 and send a processed first frame of shot image 1304 to the mobile phone, that is, T2-C2=the slave device latency L2+the transmission latency L3. In this way, the CameraService of the mobile phone can calculate an actual image latency S1=L2+L3-L1=(T2-C2)-(T1-C1) between the first frame of shot image 1302 and the first frame of shot image 1304.

To ensure accuracy of calculating the image latency S1 by the mobile phone, after the mobile phone establishes the network connection to the television 902, the mobile phone may further perform clock synchronization with the television 902, so that system time of the mobile phone is synchronous with that of the television 902.

In some embodiments, after detecting that a network connection is established to the television 902, the mobile phone may automatically connect to a first server (for example, a network time synchronization server) to perform network time synchronization. Similarly, after detecting that the network connection to the mobile phone is established, the television 902 may automatically connect to a second server (the second server may also be a network time synchronization server, and the second server may be the same as or different from the first server) to perform network time synchronization, so that the mobile phone implements clock synchronization with the television 902. For another example, after the mobile phone establishes a network connection to the television 902, if it is detected that the user starts a function button (for example, the foregoing function button 802) of a synchronous image shooting function in the camera application, the mobile phone may automatically connect to a server for network time synchronization on one hand, and may send a clock synchronization instruction to the television 902 on the other hand to trigger the television 902 to connect to a server for network time synchronization, so that the mobile phone implements clock synchronization with the television 902.

In some other embodiments, after the mobile phone detects that a network connection is established with the television 902, or after the mobile phone detects that the user starts the function button of the synchronous image shooting function in the camera application, the mobile phone may negotiate with the television 902 to make system time of the mobile phone consistent with that of the television 902. For example, the mobile phone may send a time synchronization instruction to the television 902. The time synchronization instruction may include the system time of the mobile phone. After receiving the time synchronization instruction, the television 902 may adjust the system time of the television 902 to system time that is the same as the system time of the mobile phone in the time synchronization instruction.

After the CameraService of the mobile phone calculates the actual image latency S1 between the first frame of shot image 1302 and the first frame of shot image 1304, the CameraService of the mobile phone may update the buffer time T from the initial value T0 to the image latency S1, that is, updated buffer time T=the image latency S1. In other words, the CameraService of the mobile phone may predict an actual image latency S1 between the first frame of shot image 1302 and the first frame of shot image 1304 as a subsequent image latency between a second frame of shot image from the mobile phone and a second frame of shot image from the television 902.

Alternatively, the CameraService of the mobile phone may predict, based on the image latency S1, an image latency between the second frame of shot image from the mobile phone and the second frame of shot image from the television 902 by using a preset algorithm, to update the buffer time T.

For example, after obtaining the actual image latency S1 between the first frame of shot image 1302 and the first frame of shot image 1304, the mobile phone may compare the image latency S1 with the initial value T0. If a difference between the image latency S1 and the initial value T0 is greater than a threshold, it indicates that the difference between the image latency S1 and the initial value T0 is large, and the image latency S1 obtained by the mobile phone may be inaccurate. In this case, the mobile phone may continue to set the buffer time T to the initial value T0. Correspondingly, if a difference between the image latency S1 and the initial value T0 is less than a threshold, the mobile phone may calculate a weighted average value of the initial value T0 and the image latency S1, and update a calculation result as the buffer time T. A person skilled in the art may set, based on actual experience or an actual application scenario, a specific algorithm for updating the buffer time T based on the image latency S1. This is not limited in this embodiment of this application.

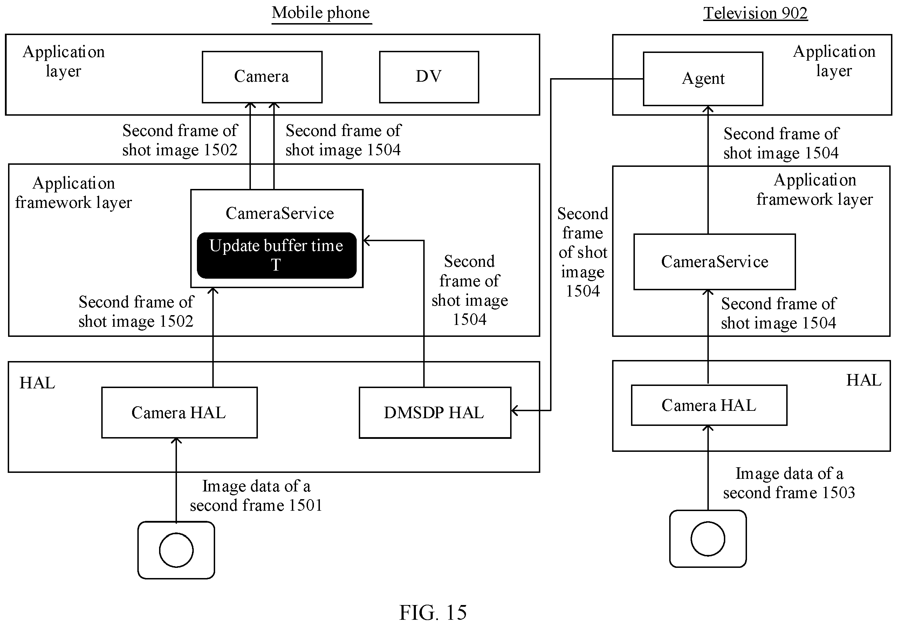

For example, the updated buffer time T=the image latency S1 is used as an example. As shown in FIG. 15, after capturing image data of the second frame 1501, the camera of the mobile phone may send the image data of the second frame 1501 to the camera HAL of the mobile phone, and the camera HAL of the mobile phone performs image processing on the image data of the second frame 1501 according to the current image shooting policy, to obtain an image processed second frame of shot image 1502. Further, the camera HAL of the mobile phone may send the second frame of shot image 1502 to the CameraService of the mobile phone, so that the CameraService of the mobile phone obtains the second frame of shot image 1502 from the mobile phone.

Still as shown in FIG. 15, similar to the processing process of the mobile phone, after capturing image data of the second frame 1503, the camera of the television 902 may send the image data of the second frame 1503 to the camera HAL of the television 902, and the camera HAL of the television 902 performs image processing on the image data of the second frame 1503 according to the image shooting policy to obtain an image processed second frame of shot image 1504. Further, the camera HAL of the television 902 may upload the second frame of shot image 1504 to the agent application of the television 902 by using the CameraService of the television 902, and the agent application of the television 902 sends the second frame of shot image 1504 to the DMSDP HAL of the mobile phone by using the established network connection. Further, the DMSDP HAL of the mobile phone may send the second frame of shot image 1504 to the CameraService of the mobile phone, so that the CameraService of the mobile phone obtains the second frame of shot image 1504 from the television 902.

Similar to the foregoing display processes of the first frame of shot image 1302 and the first frame of shot image 1304, after obtaining the second frame of shot image 1502 from the mobile phone, the CameraService of the mobile phone may wait for time S1 based on the updated buffer time T (that is, the image latency S1), and then send the second frame of shot image 1502 to the camera application for display. After obtaining the second frame of shot image 1504 from the television 902, the CameraService of the mobile phone may directly send the second frame of shot image 1504 to the camera application for display.

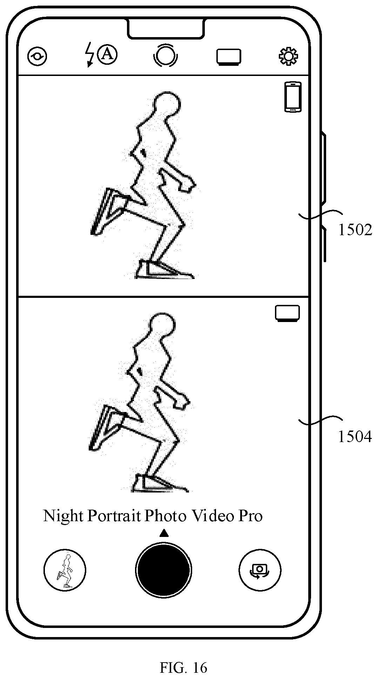

In this way, as shown in FIG. 16, after the second frame of shot image 1502 waits for the time S1, the mobile phone may shorten a time difference between the second frame of shot image 1502 from the mobile phone and the second frame of shot image 1504 from the television 902 during display, to ensure that the mobile phone synchronously displays shot images of a plurality of devices as much as possible, thereby improving user experience.

Subsequently, similar to the method for updating the buffer time T in the foregoing embodiment, when the CameraService of the mobile phone obtains the second frame of shot image 1502 from the mobile phone, the CameraService of the mobile phone may record current time T1'. When the CameraService of the mobile phone obtains the second frame of shot image 1504 from the television 902, the CameraService of the mobile phone may record current time T2'. Further, the CameraService of the mobile phone may calculate, according to the method for calculating the image latency S1 in the foregoing embodiment, an actual image latency S2 between the second frame of shot image 1502 and the second frame of shot image 1504 based on the time T1' and the time T2'. For example, S2=T2'-T1'.

Further, the CameraService of the mobile phone may predict, according to the image latency S2, an image latency between a third frame of shot image from the mobile phone and a third frame of shot image from the television 902, and then update the buffer time T based on a prediction result.

For example, the CameraService of the mobile phone may update the image latency S2 to a latest buffer time T, that is, updated buffer time T=the image latency S2. In other words, the CameraService of the mobile phone may predict an actual image latency S2 between the second frame of shot image 1502 and the second frame of shot image 1504 as a subsequent image latency between the third frame of shot image from the mobile phone and the third of shot image from the television 902.

For another example, the CameraService of the mobile phone may store the actual image latency S1 between the first frame of shot image 1302 and the first frame of shot image 1304. After obtaining the image latency S2, the CameraService of the mobile phone may update a weighted average result of the image latency S1 and the image latency S2 to a latest buffer time T. In other words, the CameraService of the mobile phone may predict the weighted average result of the image latency S1 and the image latency S2 as the image latency between the subsequent third frame of shot image from the mobile phone and the subsequent third frame of shot image from the television 902.

For another example, the CameraService of the mobile phone may further store the initial value T0 of the buffer time T. Further, after obtaining the image latency S2, the CameraService of the mobile phone may update a weighted average result of the initial value T0, the image latency S 1, and the image latency S2 as a latest buffer time T. In other words, the CameraService of the mobile phone may predict the weighted average result of the initial value T0, the image latency S1, and the image latency S2 as the image latency between the subsequent third frame of shot image from the mobile phone and the subsequent third frame of shot image from the television 902.

Subsequently, similar to FIG. 13 or FIG. 15, after capturing image data of the third frame according to the foregoing method, the mobile phone may process the image data of the third frame into the third frame of shot image, and send the third frame shot image to the CameraService of the mobile phone. Similarly, the television 902 may also capture the image data of the third frame according to the foregoing method, process the image data of the third frame into the third frame of shot image, and then send the third frame shot image to the CameraService of the mobile phone.

After obtaining the third frame of shot image from the mobile phone, the CameraService of the mobile phone may wait for time S2 based on the latest buffer time T (for example, the image latency S2), and then send the third frame of shot image of the mobile phone to the camera application for display. However, after obtaining the third frame of shot image from the television 902, the CameraService of the mobile phone may directly send the third frame of shot image of the television 902 to the camera application for display, so that the third frame of shot image from the mobile phone is synchronous with the third frame of shot image from the television 902 as much as possible after waiting for the time S2.

Subsequently, the mobile phone may continue to update the buffer time T continuously according to the foregoing method in the synchronous image shooting process with the television 902, so that after obtaining each frame of shot image from the mobile phone, the mobile phone waits for the buffer time T, and displays the shot image more synchronously with each frame of shot image from the television 902 in the display interface.

It can be learned that in a process of synchronous image shooting between the mobile phone and the television 902, the mobile phone may calculate an actual image latency between Nth (N is an integer greater than 0) frames of shot images of the mobile phone and the television 902, to predict an image latency between (N+1)th frames of shot images of the mobile phone and the television 902. In this way, the mobile phone can update, based on a prediction result, the buffer time T for displaying the (N+1)th frame of shot image of the mobile phone, so that the (N+1)th shot image from the mobile phone may be more synchronously presented to the user with the (N+1)th frame of shot image from the television after the buffer time T, to ensure that the mobile phone synchronously displays shot images of a plurality of devices as much as possible, thereby improving user experience.

In the foregoing embodiment, the example in which the camera application of the mobile phone performs synchronous image shooting with the television 902 in a preview scenario is used for description. Subsequently, if it is detected that the user inputs an image shooting instruction, the mobile phone may separately store the current Nth frames of shot images from the mobile phone and the television 902 as a photo, that is, generate two photos. Alternatively, the mobile phone may synthesize the Nth frame of shot image from the mobile phone and the Nth frame of shot image from the television 902 into one photo. For example, the mobile phone may generate a corresponding photo in an arrangement manner of the Nth frame of shot image of the two devices in a preview interface. Certainly, the mobile phone may also generate a corresponding photo in which the Nth frame of shot image from the mobile phone and the Nth frame of shot image from the television 902 are arranged in a left-right or top-down manner according to a default policy, or generate one or more photos in another manner. This is not limited in this embodiment of this application.

In some other embodiments, if it is detected that the user inputs a video recording instruction, the mobile phone may continue to separately record shot images from the mobile phone and the television 902 according to the foregoing method, to generate two video files. Alternatively, the mobile phone may record the shot images from the mobile phone and the television 902 in one video file. In this case, the shot images from the mobile phone and the television 902 may be arranged in the video in a left-right, top-down, or picture-in-picture manner. This is not limited in this embodiment of this application.

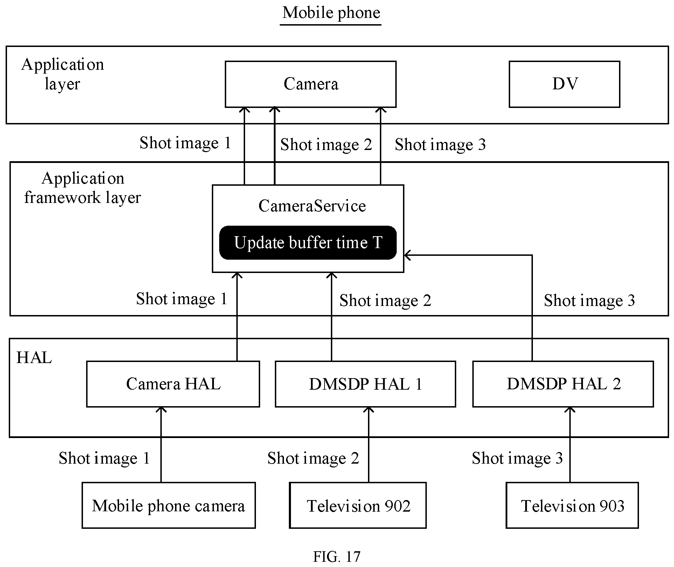

In addition, in the foregoing embodiment, an example in which the mobile phone and the television 902 perform synchronous image shooting is used for description. In some embodiments, the mobile phone may further perform synchronous image shooting with more electronic devices according to the foregoing method. For example, if it is detected that the user selects the television 902 and a television 903 in the dialog box 901 in FIG. 9, the mobile phone may separately create a DMSDP HAL 1 corresponding to the television 902 and a DMSDP HAL 2 corresponding to the television 903 according to the method in the foregoing embodiment. Further, as shown in FIG. 17, the camera of the mobile phone may send, by using the camera HAL, a shot image 1 obtained by the mobile phone to the CameraService of the mobile phone. The television 902 may send, by using the DMSDP HAL 1, a shot image 2 obtained by the television 902 to the CameraService of the mobile phone. The television 903 may send, by using the DMSDP HAL 2, a shot image 3 obtained by the television 902 to the CameraService of the mobile phone.

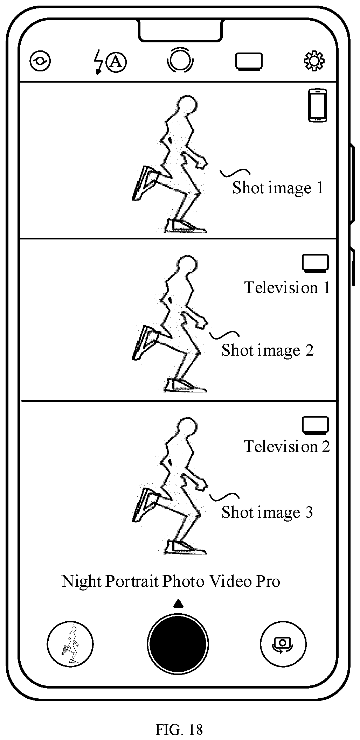

Further, similar to the foregoing embodiment, as shown in FIG. 18, after receiving the shot image 1, the CameraService of the mobile phone may first wait for the buffer time T, and then the camera application displays the shot image 1 in the display interface. After the CameraService of the mobile phone receives the shot image 2 or the shot image 3, the camera application may directly display the shot image 2 or the shot image 3 in the display interface. For example, the shot image 1, the shot image 2, and the shot image 3 can be displayed in different windows of the display interface.

A difference lies in that when updating the buffer time T, the mobile phone may calculate, according to the foregoing method, an actual image latency 1 between the shot image 1 and the shot image 2, and calculate an actual image latency 2 between the shot image 1 and the shot image 3. Then, the CameraService of the mobile phone may determine a final buffer time T based on two parameters: an actual image latency 1 and an actual image latency 2. For example, the CameraService of the mobile phone may set a larger value of the actual image latency 1 and the actual image latency 2 as the buffer time T. Alternatively, the CameraService of the mobile phone may set an average value of the actual image latency 1 and the actual image latency 2 as the buffer time T, so that the shot image 1, the shot image 2, and the shot image 3 are synchronously displayed in the display interface as much as possible.

Alternatively, the CameraService of the mobile phone may further set different buffer time for shot images of different devices. For example, the actual image latency 1 is 5 ms, and the actual image latency 2 is 3 ms. After the CameraService of the mobile phone obtains the actual image latency 1 and the actual image latency 2, the actual image latency 1 with a large latency may be set as buffer time T1. The buffer time T1 corresponds to the mobile phone. To be specific, after the CameraService of the mobile phone receives the shot image 1 from the mobile phone, the camera application needs to wait for the buffer time T1 before displaying the shot image 1. In addition, the CameraService of the mobile phone may set a difference (that is, 5 ms-3 ms=2 ms) between the actual image latency 1 and the actual image latency 2 as buffer time T2. The buffer time T2 corresponds to the television 902. To be specific, after the CameraService of the mobile phone receives the shot image 2 from the television 902, the camera application needs to wait for the buffer time T2 before displaying the shot image 2. Buffer time T3 corresponding to the television 903 may be set to 0. To be specific, after the CameraService of the mobile phone receives the shot image 3 from the television 903, the camera application may directly display the shot image 3 without waiting. In this way, for a same frame of shot image, after corresponding buffer time, the shot images of the mobile phone, the television 902, and the television 903 may be synchronously displayed in the display interface as much as possible, thereby improving user experience.

In addition, the foregoing embodiment is described by using an example in which the mobile phone is a master device in a distributed image shooting scenario. It can be understood that the master device in the distributed image shooting scenario may alternatively be an electronic device having the image shooting function, such as a tablet computer or a television. This is not limited in this embodiment of this application.

It should be noted that, in the foregoing embodiment, a specific method for implementing a distributed image shooting function between functional modules is described by using an Android system as an example. It may be understood that a corresponding functional module may also be disposed in another operating system (for example, a HarmonyOS system) to implement the foregoing method. All devices and function modules with functions similar to those in embodiments of this application fall within the scope of the claims of this application and equivalent technologies of this application.

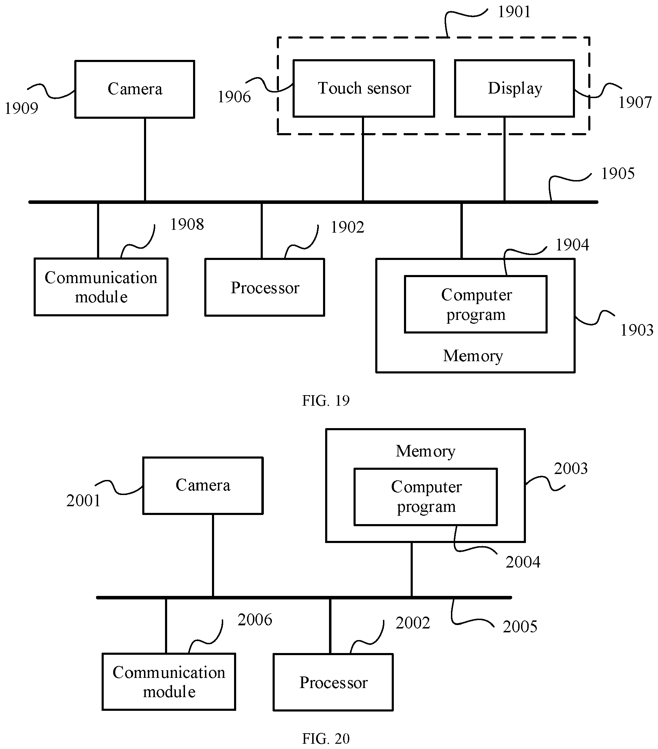

As shown in FIG. 19, an embodiment of this application discloses an electronic device. The electronic device may be the foregoing master device (for example, a mobile phone). The electronic device may specifically include: a touchscreen 1901, where the touchscreen 1901 includes a touch sensor 1906 and a display 1907; one or more processors 1902; a memory 1903; a communication module 1908; one or more cameras 1909; one or more applications (not shown); and one or more computer programs 1904. The foregoing components may be connected through one or more communication buses 1905. The one or more computer programs 1904 are stored in the memory 1903 and are configured to be executed by the one or more processors 1902. The one or more computer programs 1904 include instructions. The instructions may be used to perform the related steps performed by the master device in the foregoing embodiments.

As shown in FIG. 20, an embodiment of this application discloses an electronic device. The electronic device may be the foregoing slave device (for example, a sound box). The electronic device may specifically include: one or more processors 2002; a memory 2003; a communication module 2006; one or more applications (not shown); one or more cameras 2001; and one or more computer programs 2004. The foregoing components may be connected through one or more communication buses 2005. Certainly, a component such as a touchscreen may also be disposed in the slave device. This is not limited in this embodiment of this application. The one or more computer programs 2004 are stored in the memory 2003 and are configured to be executed by the one or more processors 2002. The one or more computer programs 2004 include instructions. The instructions may be used to perform the related steps performed by the slave device in the foregoing embodiments.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. An image shooting method, comprising:
receiving, by a first device, a first operation that a user selects to perform synchronous image shooting with a second device;
in response to the first operation, starting, by the first device, to capture a shot image, and indicating, by the first device, the second device to start to capture a shot image;
displaying, by the first device, an N^{th} frame of shot image of the first device in a first window after waiting for a preset buffer time after the first device obtains the N^{th} frame of shot image of the first device, wherein N is an integer greater than 0; and
displaying, by the first device, an N^{th} frame of shot image of the second device in a second window after the first device obtains the N^{th} frame of shot image of the second device, wherein the first window and the second window are located on a same display interface.

2. The method according to claim 1, wherein after the receiving, by a first device, a first operation that a user selects to perform synchronous image shooting with a second device, the method further comprises:
obtaining, by the first device, a first latency, wherein the first latency indicates time consumed by the first device to perform image processing on a frame of shot image;
obtaining, by the first device, a second latency, wherein the second latency indicates time consumed by the second device to perform image processing on a frame of shot image; and
obtaining, by the first device, a third latency, wherein the third latency indicates a network latency for transmitting a frame of shot image between the second device and the first device; and
the buffer time=the second latency+the third latency-the first latency.

3. The method according to claim 2, wherein after the receiving, by a first device, a first operation that a user selects to perform synchronous image shooting with a second device, the method further comprises:
obtaining, by the first device, an image shooting capability parameter of the second device, wherein the image shooting capability parameter indicates an image processing capability of the second device; and
determining, by the first device, an image shooting policy based on the image shooting capability parameter, wherein the image shooting policy comprises X image processing tasks to be executed by the first device and Y image processing tasks to be executed by the second device, and both X and Y are integers greater than 0; and
the first latency is time required by the first device to execute the X image processing tasks, and the second latency is time required by the second device to execute the Y image processing tasks.

4. The method according to claim 2 or 3, wherein the obtaining, by the first device, a third latency comprises:
sending, by the first device, a test data packet to the second device;
receiving, by the first device, a response data packet sent by the second device in response to the test data packet; and
calculating, by the first device, the third latency based on a time interval between sending the test data packet and receiving the response data packet.

5. The method according to any one of claims 1 to 4, wherein when N>1, the method further comprises:
obtaining, by the first device, an actual image latency between the N^{th} frame of shot image of the first device and the N^{th} frame of shot image of the second device; and
updating, by the first device, the buffer time based on the actual image latency.

6. The method according to claim 5, wherein the obtaining, by the first device, an actual image latency between the N^{th} frame of shot image of the first device and the N^{th} frame of shot image of the second device comprises:
recording, by the first device, first time T1 at which the N^{th} frame of shot image of the first device is obtained;
recording, by the first device, second time T2 at which the N^{th} frame of shot image of the second device is obtained; and
calculating, by the first device, the actual image latency between the N^{th} frame of shot image of the first device and the N^{th} frame of shot image of the second device, wherein the actual image latency=the second time T2-the first time T1.

7. The method according to claim 5 or 6, wherein the updating, by the first device, the buffer time based on the actual image latency comprises:
setting, by the first device, a value of the buffer time to a value of the actual image latency.

8. The method according to any one of claims 5 to 7, wherein after the updating, by the first device, the buffer time based on the actual image latency, the method further comprises:
displaying, by the first device, an (N+1)^{th} frame of shot image of the first device in the first window after waiting for an updated buffer time after the first device obtains the (N+1)^{th} frame of shot image from the first device; and
displaying, by the first device, an (N+1)^{th} frame of shot image of the second device in the second window after the first device obtains the (N+1)^{th} frame of shot image from the second device.

9. The method according to any one of claims 1 to 8, wherein that the first device obtains the N^{th} frame of shot image from the first device comprises:
capturing, by the first device, image data of the N^{th} frame by using a camera; and
performing, by the first device, image processing on the image data of the N^{th} frame to obtain the corresponding N^{th} frame of shot image.

10. The method according to any one of claims 1 to 9, wherein before the receiving, by a first device, a first operation that a user selects to perform synchronous image shooting with a second device, the method further comprises:
displaying, by the first device, a preview interface of a camera application, wherein the preview interface comprises a button used for synchronous image shooting; and
displaying, by the first device, a candidate device list in the preview interface in response to a second operation used to tap the button, wherein the candidate device list comprises the second device; and
the first operation is an operation that the user selects the second device from the candidate device list.

11. The method according to any one of claims 1 to 10, wherein after the receiving, by a first device, a first operation that a user selects to perform synchronous image shooting with a second device, the method further comprises:
performing, by the first device, clock synchronization with the second device in response to the first operation.

12. An electronic device, wherein the electronic device is a first device, and the first device comprises:
one or more cameras;
one or more processors;
a memory; and
a communication module; and
the memory stores one or more computer programs, the one or more computer programs comprise instructions, and when the instructions are executed by the electronic device, the electronic device is enabled to perform the image shooting method according to any one of claims 1 to 11.

13. A computer-readable storage medium, wherein the computer-readable storage medium stores instructions, and when the instructions are run on an electronic device, the electronic device is enabled to perform the image shooting method according to any one of claims 1 to 11.

14. A computer program product comprising instructions, wherein when the computer program product runs on an electronic device, the electronic device is enabled to perform the image shooting method according to any one of claims 1 to 11.
